# EUROPÄISCHE PATENTSCHRIFT

(11) **EP 2 046 668 B1**
(45) Veröffentlichungstag und Bekanntmachung des Hinweises auf die Patenterteilung: **01.02.2012**
(21) Anmeldenummer: 07784603.8
(22) Anmeldetag: 02.08.2007
(51) Int. Cl.: B65G 1/04, B65G 1/137, B65G 59/00, B65G 59/02

(54) **FÖRDEREINRICHTUNG ZUM DEPALETTIEREN VON AUF EINEM WARENTRÄGER GESTAPELTER WAREN**
CONVEYING APPARATUS FOR DEPALLETIZING GOODS STACKED ON A GOODS SUPPORT
DISPOSITIF DE TRANSPORT POUR DÉPALÉTISER DES MARCHANDISES EMPILÉES SUR UN SUPPORT DE MARCHANDISES

(30) Priorität: 03.08.2006 AT 13092006
(43) Veröffentlichungstag der Anmeldung: 15.04.2009
(73) Patentinhaber: TGW Mechanics GmbH, 4600 Wels (AT)
(72) Erfinder: HANSL, Rudolf, 4020 Linz (AT); BERGMANN, Jörg, 4600 Wels (AT); RADLER, Thomas, 4600 Wels (AT)
(74) Vertreter: Ofner, Clemens
(86) Internationale Anmeldenummer: PCT/AT2007/000374
(87) Internationale Veröffentlichungsnummer: WO 2008/014532

(56) Entgegenhaltungen:
- JP-A- 7 069 455
- JP-A- 8 081 058
- US-A- 5 683 222

## Beschreibung

Die Erfindung betrifft eine Fördereinrichtung wie sie im Patentanspruch 1 beschrieben ist.

Aus dem Dokument JP 08 081 058 A ist eine Fördereinrichtung zum Depalettieren und Abfördern von auf einem Warenträger in mehreren Lagen gestapelten Waren bekannt. Diese Fördereinrichtung entspricht dem Oberbegriff des Anspruchs 1 und weist eine Hubfördervorrichtung mit einem Lasttragmittel für den Warenträger und eine, in einer zu einer Hubrichtung senkrecht erstreckenden Förderebene, in einer Abförderrichtung der Waren relativ zum Lasttragmittel verstellbaren, dem Lasttragmittel zugewandt eine zur Förderebene geneigte Auflaufebene aufweisende Fördervorrichtung auf. Diese wird durch eine, die Auflaufebene ausbildende, in der Förderrichtung reversibel über einen Verstellantrieb in einer Führungsbahn verfahrbare Aufnahmefördervorrichtung und zumindest eine in der Abförderrichtung nachgeordnete, in der Führungsbahn verstellbare Transferfördervorrichtung gebildet.

Aus der JP 2003-081426 A ist eine Fördereinrichtung zum lagenweisen Depalettieren von auf einem Warenträger gestapelter Waren bekannt, bei der ein Warenträger mit den Waren auf einer durch eine Scherenhubbühne gebildeten Hubfördervorrichtung aufgelagert ist und mit der der Warenstapel entsprechend der zu depalettierenden Lage im Bezug auf eine durch eine in Abförderrichtung der Lage nachgeordneten, eine Förderebene ausbildende Abfördervorrichtung in zur Förderebene vertikalen Richtung positioniert wird. Weiter weist die bekannte Einrichtung eine von der Hubfördervorrichtung unabhängige, in zu einer Aufstandsfläche vertikaler Richtung verstellbare Manipulationseinrichtung zur Positionsabsicherung und Erfassung der zu depalettierenden Lage und deren Transferierung auf einen in Abförderrichtung nachgeordneten Rollenförderer auf.

Aus dem Dokument EP 1 187 782 B1 ist eine Vorrichtung zum Handhaben von Lagen von auf Paletten angeordneten Gütern mit einem mittels einer Hub- und Verfahrvorrichtung manipulierbaren Vakuumhebekopf bekannt, welcher auf die Güter der zu depalettierenden Lage aufgesetzt wird und mit einer Vielzahl über individuell ansteuerbare Ventile mit einem Vakuum beaufschlagbare Saugkammern aufweist, um die Güter einer Lager aufzunehmen und an eine Abfördervorrichtung zu überstellen.

Aus der WO 02/10043 A ist weiters eine Vorrichtung zum Depalettieren von Lagen auf einem Warenträger gestapelter Artikel bekannt, bei der über eine Hubvorrichtung mit einer Saugvorrichtung die zu depalettierende Lage vom Warenträger abgehoben und auf einem in Abförderrichtung nachgeordneten Förderer abgegeben wird und mittels einer weiteren, davon unabhängigen Abhebevorrichtung zwischen den Lagen angeordnete Trennlagen, z.B. Trennkartons, nach dem Entfernen der Lage der Artikel abgehoben und in einer neben dem Stellplatz des Warenträgers angeordneten Ablagevorrichtung abgestapelt werden.

Aus einem weiteren Dokument, der DE 26 31 942 A1, ist eine Depalettierungsvorrichtung mit einer, in einem Endbereich eine keilförmige Auflaufebene ausbildenden Fördervorrichtung bekannt. Bei dieser Fördervorrichtung ist eine um eine horizontale Achse drehbare, in einem Schlitten federelastisch gelagerte Rolle an eine Seitenwand einer Packung anstellbar. Durch den Reibungswiderstand wird diese aufgekantet, wonach die Rolle bzw. ein über die Rolle geführtes bandförmiges Fördermittel in den zur darunter befindlichen Packung entstehenden Zwischenraum einführbar ist und damit die Packung in Abförderrichtung von der Fördervorrichtung aufgenommen wird.

Aufgabe der Erfindung ist es eine Fördereinrichtung zum Depalettieren und Ab- bzw. Weiterfördern von auf einem Warenträger, insbesondere einer Palette, in mehreren Lagen gestapelten Waren bzw. Gebinden zu schaffen, mit der Manipulations- Leerzeiten zur Beschleunigung des Depalettierungsvorganges minimiert werden.

Diese Aufgabe der Erfindung wird durch die im Anspruch 1 wiedergegebenen Merkmale erreicht. Der überraschende Vorteil dabei ist, dass durch einen voneinander entkoppelten Abfördervorgang durch die voneinander unabhängig betreibbaren Fördervorrichtungen für das Aufnehmen einer Lagenreihe oder Lage der auf dem Warenträger gestapelten Waren oder Warengebinde und deren Abförderung und weiters einer nahezu zeitgleich mit dem Aufnahmevorgang vorzunehmenden Manipulation zur Entfernung einer frei werdenden Trennlage den Warenfluss unterbrechende Leerzeiten vermieden werden und dadurch der Warenumschlag gesteigert wird.

Vorteilhaft sind dabei die in den Ansprüchen 2 bis 9 beschriebenen Ausbildungen weil dadurch für die voneinander unterschiedlichen Manipulationsanforderungen durch für eine Mehrfachnutzung konzipierte Komponenten der technische Aufwand reduziert wird wodurch eine hohe Wirtschaftlichkeit der Fördereinrichtung erreicht wird.

Es ist aber auch eine Weiterbildung wie sie im Anspruche 10 beschrieben ist von Vorteil, weil durch einen federelastischen Bewegungsablauf bei der Zustellbewegung und des Einfahrvorgang der Aufnahmefördervorrichtung zwischen die Lagen der Waren bzw. der Warengebinde eine feinfühlige und schonende und sichere Aufnahme der Waren erfolgt und Beschädigungen, Fehlmanipulationen und ein erhöhter Verschleiß wirkungsvoll vermieden wird.

Möglich ist aber auch eine vorteilhafte Weiterbildung wie sie im Anspruch 11 beschrieben ist, wodurch über elektronische Erfassungsmittel, z.B. Kraftmesssensoren, Annäherungssensoren etc. Betriebszustände erfasst und der Einfahrvorgang der Aufnahmefördervorrichtung zwischen die Lagen der Waren bzw. der Warengebinde, durch Ansteuerung des Verstellantriebes, z.B. eines mittels eines regelbaren Servomotors betriebenen Zugmitteltriebes, beispielsweise nach Vorgaben in Abhängigkeit von der Beschaffenheit der Waren, bzw. der Warengebinde, bedarfangepasst, oder nach vorgegebenen Parametern steuerbar ist.

Es ist aber auch eine Ausbildung nach Anspruch 12 von Vorteil mit der eine Absicherung der auf dem Warenträger gestapelten Waren oder Warengebinde während der Aufnahmemanipulation erreicht wird wodurch schnellere Bewegungsabläufe zur Verringerung von Taktzeiten erreicht werden und Störungen durch eine Fehlmanipulation vermieden werden.

Vorteilhaft sind dabei Ausbildungen wie sie in den Ansprüchen 13 bis 17 beschrieben sind weil damit ein einfacher und störungssicherer technischer Aufbau mit geringer Verschleißanfälligkeit erreicht wird wodurch der Wartungsaufwand reduziert wird.

Möglich sind aber auch vorteilhafte Weiterbildungen gemäß den Ansprüchen 18 und 19 wodurch beim Aufnehmen einer Lage oder Lagenreihe der Waren bzw. Warengebinde ein Aufkanten zur Ausbildung eines keilförmigen Freiraumes ermöglicht wird in dem die Aufnahmefördervorrichtung zur Aufnahme der Lagenreihe bzw. der Lage eingefahren werden kann.

Vorteilhaft ist aber auch ein Rückhaltemittel wie im Anspruch 20 beschrieben weil dadurch die unter der Förderebene verbleibenden Lagen bzw. Lagenreihen vor einer reibungsbedingten Mitnahme durch die in Abförderrichtung bewegte Aufnahmefördervorrichtung wirkungsvoll gesichert sind.

Durch die im Anspruch 21 beschriebene vorteilhafte Ausbildung werden technisch bewährte, wartungsarme und kostengünstige Antriebe erreicht.

Durch die vorteilhaften Ausbildungen, wie sie in den Ansprüchen 22 bis 32 beschrieben sind, werden einen erhöhten Verschleiß bewirkende Aufnahmewiderstände beim Einfahren der Aufnahmefördervorrichtung bzw. der Fördermodule zwischen den Lagen weitestgehend herabgesetzt und werden einen Verschleiß, bedingt durch eine Relativbewegung des Fördermittels und den aufzunehmenden Waren bzw. Warengebinde, ausgesetzte Komponenten, wie Fördermittel, z.B. Förderbänder, Förderriemen, technisch und kostengünstig einfacher tauschbar wie auch eine Auflaufebene durch eine Lageabstimmung der Fördermodule bzw. einer vorgesetzten Förderwalze optimierbar ist.

Zum besseren Verständnis der Erfindung wird diese anhand der in den Figuren gezeigten Ausführungsbeispiele näher erläutert.

Es zeigen:
- Fig. 1: eine erfindungsgemäße Fördereinrichtung in Ansicht;
- Fig. 2: die Fördereinrichtung in Draufsicht;
- Fig. 3: eine Anschlaganordnung der Fördereinrichtung in Ansicht;
- Fig. 4: die Anschlaganordnung in Draufsicht;
- Fig. 5: eine Detailansicht einer Abnahme- bzw. Anhebevorrichtung der Fördereinrichtung;
- Fig. 6: die Abnahme- und Anhebevorrichtung mit einer Anhebe- Greifvorrichtung;

- Fig. 7: eine andere Ausbildung der Anschlaganordnung, in Ansicht;
- Fig. 8: eine weitere Ausbildung der Abnahme- und Anhebevorrichtung, in Ansicht.

Einführen sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

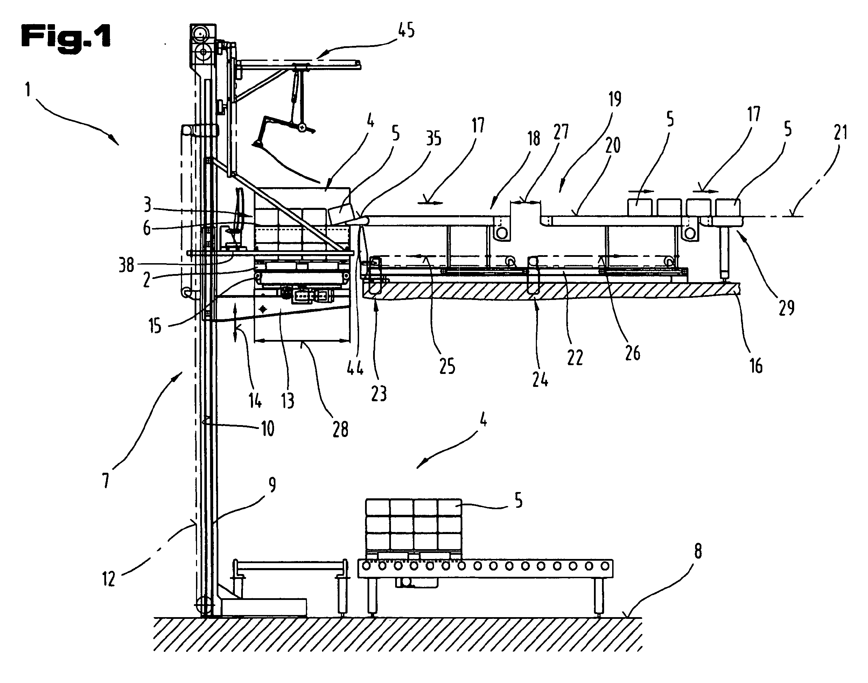

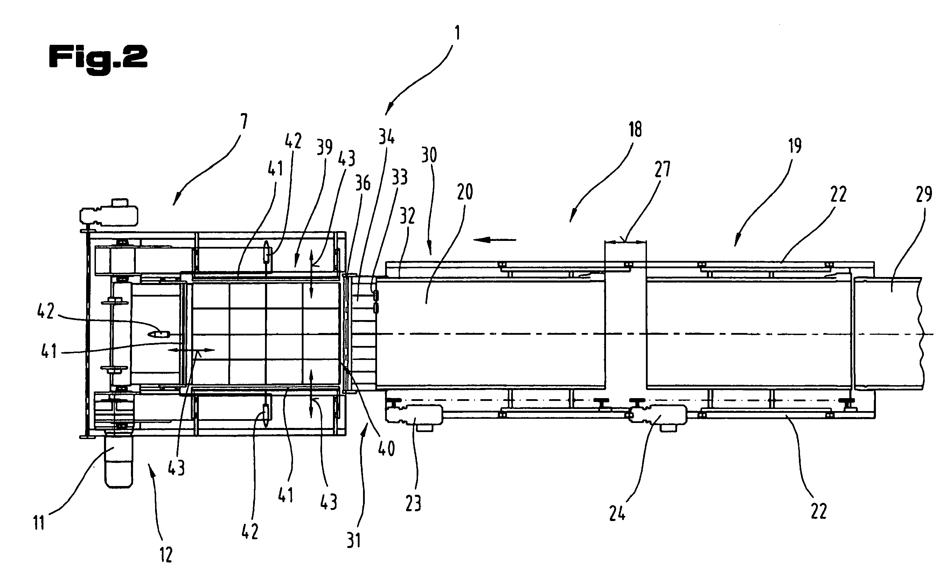

In den Fig. 1 und 2 ist eine Fördereinrichtung 1 zum Depalettieren und Ab- bzw. Weitefördem von auf einem Warenträger 2, z.B. einer Palette, in mehreren Lagen 3 gestapelter Waren 4 bzw. Warengebinde 5, z.B. Packungen, Flaschen, Behältnissen, etc. gezeigt. In Abhängigkeit der Beschaffenheit der Waren 4 bzw. Warengebinde 5 sind die Lagen 3 unmittelbar aufeinander gestapelt oder aber unter Anwendung einer Trennlage 6 zwischen den Lagen 3, z.B. eines Trennkartons, gestapelt.

Die Fördereinrichtung 1 besteht im Wesentlichen aus einer Hubfördervorrichtung 7 mit einer auf einer Aufstandsfläche 8 abgestützten und zu dieser in senkrechter Richtung erstreckenden Mastanordnung, bevorzugt mit zwei parallel erstreckenden Masten 9 die Führungsanordnungen 10 ausbilden in denen ein über einen Hubantrieb 11, z.B. mittels eines elektrisch betriebenen Zugmitteltriebes 12 ein Lasttragmittel 13 verstellbar - gemäß Doppelpfeil 14 - gelagert ist.

Das dargestellte Ausführungsbeispiel zeigt ein 2-etagige Anordnung, bei der in einer unteren Etage mittels eines Palettenförderers, z.B. Rollenbahnförderer, die Warenträger 2 mit den darauf gestapelten Waren 4 bzw. Warengebinde 5 zugeführt werden und von einem auf dem Lasttragmittel 13 angeordneten Rollen- oder Zugmittelförderer 15 auf das Lasttragmittel 13 übernommen werden.

In einer darüber liegenden, beispielsweise durch eine Geschoßdecke 16 getrennten Etage erfolgt die Depalettierung nach erfolgter Positionierung des Warenträgers 2 mit der Hubfördervorrichtung 7 für eine Abförderung in einer Abförderrichtung - gemäß Pfeil 17 - der Lage 3 oder nur einzelner der Warengebinde 5, beispielsweise einer oder mehrerer Reihen der gestapelten Waren 4 in vertikaler Richtung in Bezug auf eine Abfördervorrichtung 18.

Die Übernahme der Waren 4 bzw. Gebinde 5 durch die Abfördervorrichtung 18 erfolgt, wie an sich bekannt, durch ein Unterfahren der zu depalettierenden Lage 3 mit der Abfördervorrichtung 18 in einer Trennebene - wie später noch im Detail beschrieben.

Die Lage 3, bzw. Gebindereihe wird im gezeigten Ausführungsbeispiel von der Aufnahmefördervorrichtung 18 aufgenommen und einer in Abförderrichtung - gemäß Pfeil 17 - nachgeordneten Transferfördervorrichtung 19, die mit Fördermittel 20, bevorzugt Förderbänder eine gemeinsame Förderebene 21, parallel zur Aufstandsfläche 8 ausbilden, abgefördert.

Die Aufnahmefördervorrichtung 18 und die Transferfördervorrichtung 19 sind in einer parallel zur Förderebene 21 verlaufenden Führungsbahn 22 und jeweils einen eigenen Verstellantrieb 23, 24 unabhängig voneinander in der Abförderrichtung- gemäß Pfeil 17 - reversibel - gemäß Pfeile 25, 26 - verfahrbar, wobei die Verstellbarkeit derart ausgelegt ist, dass die Aufnahmefördervorrichtung 18 und die Transferfördervorrichtung 19 mit den Fördermitteln 20 dicht an dicht oder in einen maximalen Abstand 27 verstellbar sind, der in etwa einer Länge 28 des Lasttragmittels 13 entspricht.

In einer von der Hubfördervorrichtung 7 entfernten Endstellung der Transferfördervorrichtung 19 ist in Abförderrichtung - gemäß Pfeil 17 - eine direkte Abgabe und Weiterförderung der depalettierten Waren 4 auf eine nachgeordnete Abfördervorrichtung 29 vorgesehen wobei gegebenenfalls noch eine Vereinzelungsvorrichtung, Verteilvorrichtung, etc. davor angeordnet sein kann.

Die Aufnahmefördervorrichtung 18 wird bevorzugt, für eine sichere Beförderung, unterschiedlich ausgebildeter Warengebinde 5, durch einen Gurtbandförderer 30 gebildet, welcher in einem der Hubfördereinrichtung 7 zugewandten Endbereich 31 zumindest ein, bevorzugt an einem Tragrahmen 32, bevorzugt über Kupplungsmittel 33, befestigtes Fördermodul 34 aufweist, welches keilförmig in Richtung der Hubfördervorrichtung 7 ausgebildet ist und damit eine zur Förderebene 21 geneigt verlaufende Auflaufebene 35 ausbildet.

Durch diese keilförmige Gestaltung des Fördermoduls 34 wird nach einem geringen Aufkanten des Warengebindes 5, entweder reibungsbedingt durch Anwirken des Fördermoduls 34 bzw. des laufenden Fördermittels, z.B. Förderband, Förderriemen an einer Seitenfläche des Warengebindes 5, oder aber nach einem Anhebevorgang - wie noch später im Detail beschrieben - ein Freiraum zwischen den Lagen 5 geschaffen in dem die Aufnahmefördervorrichtung 18 durch Verstellung in Richtung des Lasttragmittels 13 eingeführt werden kann und somit die zu depalettierende Lage 5 vom Fördermittel 20 aufgenommen und in Abförderrichtung - gemäß Pfeil 17 - in Richtung der anschließenden Transferfördervorrichtung 19 gefördert wird.

Bevorzugt weist die Aufnahmefördervorrichtung 18, dem Lasttragmittel 13 zugewandt, mehrere über die Förderbreite benachbarte Fördermodule 34 auf die entweder von der Aufnahmefördervorrichtung 18 mitgetrieben oder über einen eigenständigen Antrieb angetrieben werden. Bevorzugt sind die aneinander gereihten Fördermodule 34 miteinander antriebsgekuppelt, aber bevorzugt für Wartungsmaßnahmen, z.B. Wechsel des Bandes, Riemen einfach tauschbar wozu die Kupplungsmittel 33 ausgebildet sind um dies zu ermöglichen.

Eine weitere vorteilhafte Ausbildung besteht darin, den Fördermodulen 34 vorgelagert eine angetriebene Förderwalze 36, mit relativ kleinem Durchmesser und mit einer Oberflächenbeschaffenheit die einen hohen Reibungskoeffizienten aufweist, vorzusehen. Bevorzugt wird die Förderwalze 36 über den Antrieb der Aufnahmefördervorrichtung 18 bzw. von den Fördermodulen 34 mit angetrieben.

Wie weiter den Fig. 1 und 2 zu entnehmen ist, ist am Mast 9 über einen weiteren Hubantrieb 37, z.B. dem Zugmitteltrieb 12, ein Tragrahmen 38 in Hubrichtung, relativ zum Lasttragmittel 13, verstellbar gelagert, auf dem eine Anschlaganordnung 39 durch einen Aufnahmeraum 40 dreiseitig umgrenzende Anschlagmittel 41 vorgesehen. Ein Anschlagmittel begrenzt den Aufnahmeraum 40 in Richtung des Mastes 9 und die weiteren begrenzen den Aufnahmeraum 40 einander gegenüberliegend seitlich.

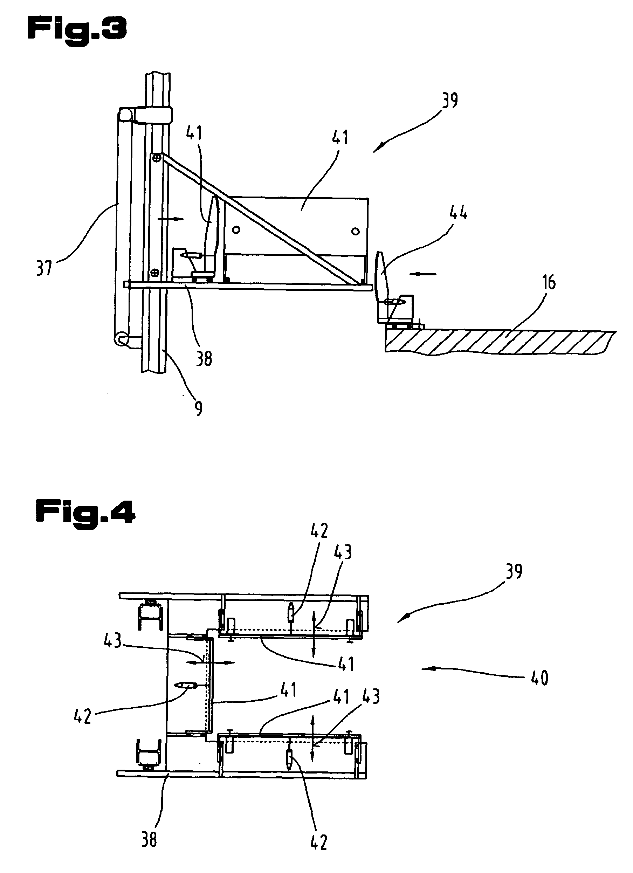

Wie nun noch zusätzlich den Fig. 3 und 4 zu entnehmen, sind die Anschlagmittel 41 über Stellmittel 42, z.B. mit einem Druckmedium beaufschlagbare Zylinder, zwischen einer Innenstellung, bei der die Anschlagmittel 41 die auf dem Warenträger 2 angeordneten Waren 4 eng umfassen und einer Außenstellung am Tragrahmen 38 verstellbar- gemäß Doppelpfeil 43 - angeordnet.

Durch die vom Lasttragmittel 13 unabhängige Verstellbarkeit des Tragrahmens 38 mit der Anschlaganordnung 39 ist es möglich, die Anschlagmittel 41 relativ zum Lasttragmittel 13 in eine Stellung zu positionieren, bei der die zu depalettierende Lage 3, also die Lage 3 oberhalb der Förderebene 21, gesichert positioniert wird. Selbstverständlich ist es auch möglich, eine Stellung der Anschlagmittel 41 unterhalb der Förderebene 21 bei Bedarf zu wählen. Bevorzugt ist weiters dem Lasttragmittel 13 zugewandt ein verstellbares, schildartiges Rückhaltemittel 44 über eine Förderbreite erstreckend im Bereich unterhalb der Abfördervorrichtung 18 ortsfest, beispielsweise auf der Geschoßdecke 16 angeordnet, um eine Absicherung der auf dem Warenträger 2 zu verbleibenden Waren 4 bzw. Warengebinde 5 zusätzlich zu erreichen.

Durch die beschriebene Anschlaganordnung 39 wird bei einer losen Zustellung der Anschlagmittel 41 eine Führung der zu depalettierenden Waren 4 erreicht. Weiters ist es aber auch möglich, mit den Anschlagmitteln 41 ein Spannen der Lage 3 oder einer einzelnen Reihe der Lage 3, insbesondere durch individuell verstellbare Spannmittel an den Anschlagmitteln 41 zu erreichen. Eine derartige Ausbildung ermöglicht beispielsweise mit einer Vertikalverstellung des Tragrahmens 38 mittels des Hubantriebes 36 die auf die Aufnahmefördervorrichtung 18 zu übernehmende Lage 3 anzuheben, um dadurch einen Freiraum für die Aufnahmefördervorrichtung 18 bzw. die Fördermodule 34 zu schaffen, um so die Übernahme der Lage 18 auf die Aufnahmefördervorrichtung 18 zu gewährleisten.

In Abhängigkeit von der Ausbildung und Beschaffenheit der Waren 4 bzw. Warengebinde 5, kann ein Anheben, wie vorhergehend beschrieben, für den Depalettiervorgang vorteilhaft sein.

Abhängig von der Ausbildung und der Beschaffenheit der Waren 4 bzw. Warengebinde 5, erfolgt aber auch das Aufnehmen einer Lage 3 unmittelbar durch Einführen des mit dem keilförmigen Fördermodul 34 bzw. der Förderwalze 36 versehenen Aufnahmefördervorrichtung 18, bei einer Verstellbewegung der Aufnahmefördervorrichtung 18 - gemäß Pfeil 25 - da in Folge eines Reibschlusses bei Anstellen des Fördermoduls 34 bzw. der Förderwalze 36 an die zu depalettierende Ware 4 ein Aufkanten durch das Fördermittel 20 erfolgt, wodurch ein Zwischenraum für das Eindringen der Aufnahmefördervorrichtung 18 erreicht wird und so die Waren 4 vom Fördermittel 20 übernommen und in Abförderrichtung - gemäß Pfeil 17 - gefördert werden.

Durch die wie bereits zu den Fig. 1 und 2 ausgeführt unabhängige und reversible Verstellbarkeit der Aufnahmefördervorrichtung 18 und der Transferfördervorrichtung 19 ist es möglich, den Depalettiervorgang mit der Transferfördervorrichtung 19 unabhängig von der Weiterförderung der Waren 4 bzw. Warengebinde 5 von der Transferfördervorrichtung 19 auf die Abfördervorrichtung 29 durchzuführen, wodurch eine wesentliche Beschleunigung des Depalettiervorganges durch Einsparung von Wartezeiten, die bei einer unmittelbaren Förderung der Waren 4 von der Aufnahmefördervorrichtung auf die Abfördervorrichtung 29 entstehen würden, eingespart werden.

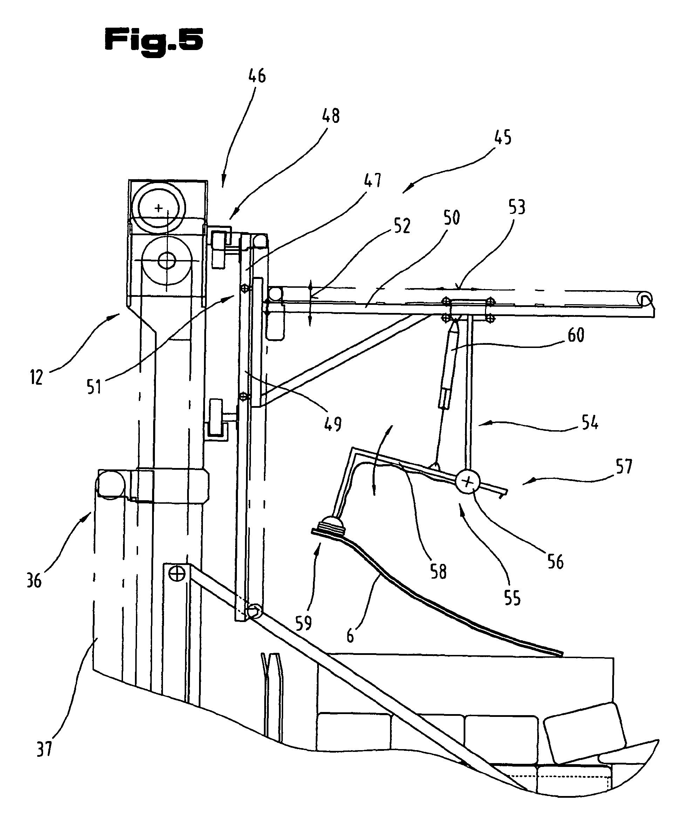

Den Fig. 1,2 und im Detail der Fig. 5 nun eine am Mast 9 der Hubfördervorrichtung 7 in einem Bereich oberhalb der Förderebene 21 angeordnete Abnahme- bzw. Anhebevorrichtung 45 zu entnehmen die alternativ für das Abnehmen und den Abtransport der Trennlage 6 bzw. für einen Anhebevorgang an den Waren 4 bzw. Warengebinde 5 vorgesehen ist

Diese wird durch eine quer zur Abförderrichtung - gemäß Pfeil 17 - und parallel zur Förderebene 21 linearen Führungsanordnung 46 und einem Fahrschlitten 47, der in dieser linear mittels eines Antriebs 48, z.B. dem Zugmitteltrieb, verstellbar gelagert ist, gebildet. Der Fahrschlitten 47 ist in einer Endstellung etwa mittig zum Lasttragmittel 13 ausgerichtet ist und in einer weiteren Endstellung in einem Bereich seitlich neben dem Lasttragmittel 13 positionierbar.

Am Fahrschlitten 47 ist eine weitere lineare Führungsanordnung 49 vorgesehen, welche im Bezug auf die Förderebene 21 senkrecht ausgerichtet ist und in der ein Auslegerarm 50 mittels eines Hubtriebes 51, z.B. dem Zugmitteltrieb, verstellbar - gemäß Doppelpfeil 52 - geführt ist.

Eine möglich Ausbildung besteht auch darin, den Auslegerarm 50 am Fahrschlitten 47 um eine zur Förderebene 21 senkrecht verlaufende Schwenkachse zu lagern wie dies noch später im Detail beschrieben ist, wodurch die das Lasttragmittel 13 seitlich überragende Führungsanordnung 46 für den Fahrschlitten 47 vermieden und eine technisch einfache Verstellanordnung des Auslegerarmes 50 erreicht wird.

Am Auslegerarm 50 ist linear verstellbar - gemäß Doppelpfeil 53 - eine Greifvorrichtung 54 mit einem in einer Schwenklagerung 55, welche eine parallel zur Förderebene 21 und in zur Abförderrichtung - gemäß Pfeil 17 - senkrecht verlaufende Schwenkachse 56 ausbildet, ein Greiferkopf 57 schwenkbar gelagert, der beispielsweise durch einen mehrarmigen Hebel 58 gebildet ist und der mit bedarfsgerecht ausgebildete Greifmittel 59, z.B. Vakuumsauger oder Hebehaken, Zangengreifer, etc. bestückbar ist.

Die Positionierung des Greifkopfes 57, für die jeweils vorgesehene Funktion, erfolgt durch ein Schwenken des Hebels 58 zwischen zwei Endstellungen und erfolgt dies beispielsweise über ein mit einem Druckmedium beaufschlagbares Stellmittel 60.

An Hand der Fig. 5 ist nunmehr die Wirkungsweise der Abnahme- bzw. Anhebevorrichtung 45 für das Entfernen der beim Depalettierungsvorgang frei werdenden Trennlage 6 gezeigt, welche in einer Wirkstellung des Greiferkopfes 57 bzw. des Hebels 58 von einem Vakuumsauger 61 aufgenommen und durch Anheben des Greiferkopfes 57 und Verstellung in Abförderrichtung - gemäß Pfeil 17 - die Trennlage 6 mit fortschreitender Aufnahme der Warengebinde 5 auf der Aufnahmefördervorrichtung 18 von der verbleibenden Lage 3 abgelöst und aufgenommen wird.

Durch diesen Vorgang wird ein nahezu zeitgleiches Aufnehmen der Waren 4 durch die Aufnahmefördervorrichtung 18 und Entfernung der Trennlage 6 und deren Sammlung in einer seitlich vorgesehenen Ablagevorrichtung, z.B. eine Palette, Gitterbox, Presse etc. möglich.

Durch die gleichzeitige Hebe- und Verfahrbewegung des Greiferkopfes 57 wird die Trennlage 6 auch dann verlässlich abgelöst, wenn diese, wie es fallweise vorkommt, auf der unteren Lage 3 anhaftet, z.B. durch Kleberreste, etc.

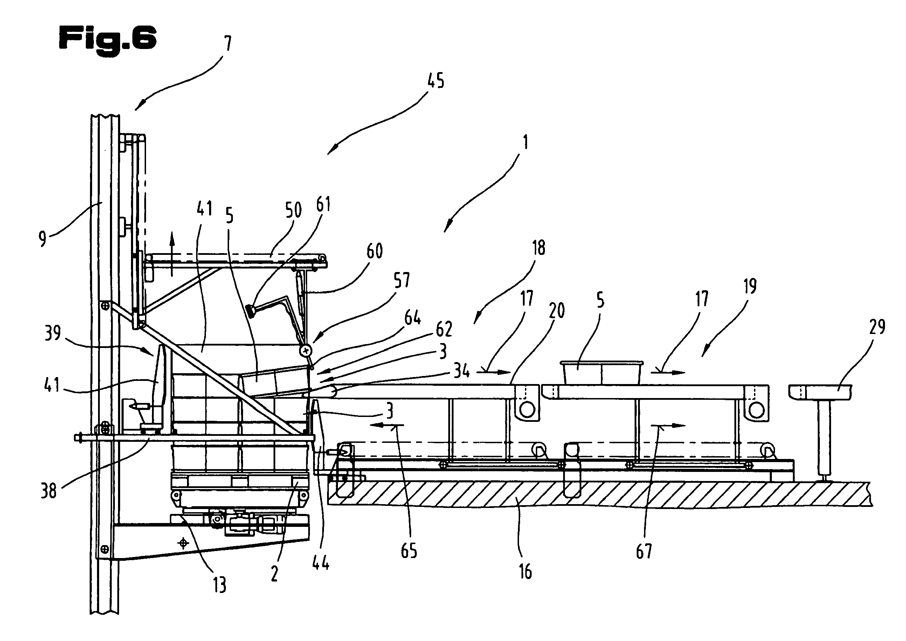

In der Fig. 6 ist in vereinfachter Darstellung die Abnahme- bzw. Anhebevorrichtung 45 gezeigt und an Hand der Figur die weiteren Funktion, zum beispielsweisen Anheben einer Gebindereihe 62, nachfolgend ein Handling für Warengebinde 5 beschrieben die an einem oberen Rand 63 eine wulstförmige Randausbildung aufweisen. Am Greiferkopf 57 ist zumindest ein Hebehaken 64 vorgesehen mit dem die Randwulst untergriffen wird um eine Anhebung des Warengebindes 5 zu bewerkstelligen.

Eine derartige Gebindeausbildung besteht vielfach bei stapelbaren, eine offene Einfüllöffnung aufweisenden Warenbehältern.

Zum Aufnehmen des Warengebindes 5 bzw. der Gebindereihe 62 durch die in Richtung der Hubfördervorrichtung 7 - gemäß Pfeil 65 - verstellbare Aufnahmefördervorrichtung 18 wird der Greiferkopf 57 auf den Auslegerarm 50 in die von der Hubfördervorrichtung 7 entfernte Endstellung verstellt und der Greiferkopf 57 bzw. der Hebelarm 58, der einerseits mit den Hebehaken 64 und andererseits mit dem Vakuumsauger 61 versehen ist, mittels des Stellmittels 60 in eine Eingriffstellung für den Hebehaken 64 verstellt.

Im gezeigten Ausführungsbeispiel ist das Warengebinde 5 bzw. durch die Anordnung mehrerer nebeneinander liegender Hebehaken 64 die Gebindereihe 62, welche für die Depalettisierung vorgesehen ist, durch ein Anheben des Auslegearms 50 - gemäß Pfeil 66 - geringfügig aufgekantet, wodurch zwischen den Lagen 3 ein keilförmiger Freiraum entsteht, der ein Eindringen des keilförmigen Fördermoduls 34 zwischen die Lagen 3 während der Verstellung der Aufnahmefördervorrichtung 18 ermöglicht und womit der Hebehaken 64 durch Verstellung des Hebelarmes 58 ausgeklinkt wird.

Das Warengebinde 5 bzw. die Gebindereihe 62 wird in Folge vom Fördermittel 20, dessen Obergurt in zur Verstellrichtung - gemäß Pfeil 65 - entgegen gesetzter Abfördervorrichtung - gemäß Pfeil 17 - läuft, aufgenommen.

Dieser Vorgang kann selbstverständlich bei jeder weiteren aufzunehmenden Gebindereihe 62 in der beschriebenen Weise erfolgen. In der Fig. 6 ist weiters auch die bereits in den vorhergehenden Figuren beschriebene Anschlaganordnung 39 mit den Anschlagmitteln 41 zur Absicherung der Waren 4 bzw. Warengebinde 5 während des Depalettierungsvorganges gezeigt. Ebenfalls ist der Fig. auch das Rückhaltemittel 44, welches unterhalb der Aufnahmefördervorrichtung 18 ortsfest, im gezeigten Ausführungsbeispiel auf der Geschoßdecke 16, schwenkbar befestigt ist, zu entnehmen.

Weiters ist der Fig. 6 zu entnehmen, dass durch die unabhängige Verstellung der Aufnahmefördervorrichtung 18 und der Transferfördervorrichtung 19 bereits während eines Depalettiervorganges und Übername der Warengebinde 5 von der Aufnahmefördervorrichtung 18, bereits auf der Transferfördervorrichtung 19 befindliche Warengebinde 5, nach einer Verstellung der Transferfördervorrichtung 19 in Richtung der Abfördervorrichtung 29 - gemäß Pfeil 67 - abzufördern. Dadurch wird eine hohe Flexibilität der erfindungsgemäßen Fördereinrichtung 1 bei einer Reduzierung von Leerzeiten erreicht wodurch sich der Warenumschlag und damit die Wirtschaftlichkeit derartiger Einrichtungen erhöht.

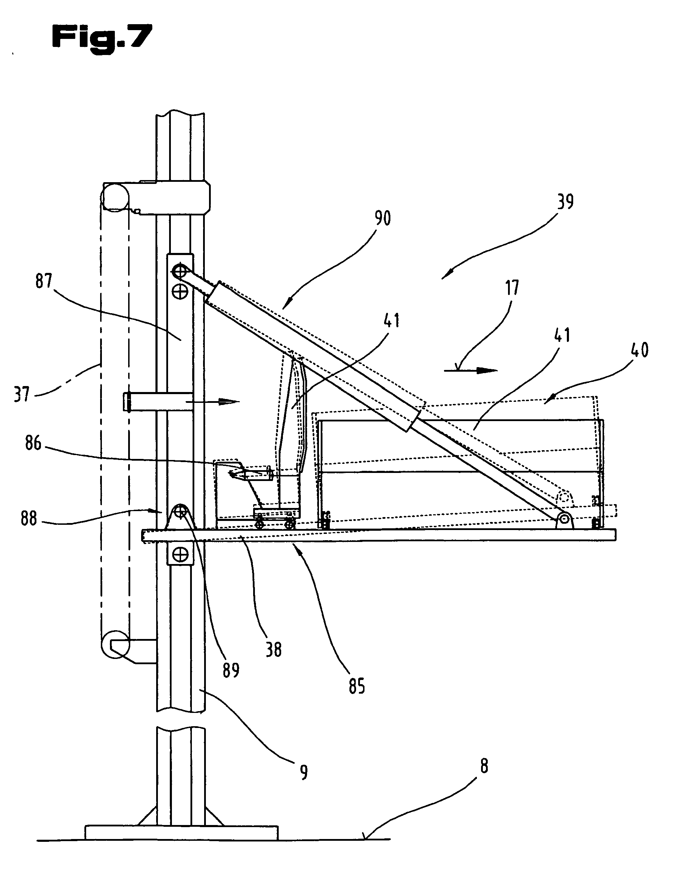

In der Fig. 7 ist eine weitere Ausbildung der Anschlaganordnung 39 mit den verstellbaren Anschlagmitteln 41 gezeigt. Eine Verstellbarkeit der den Aufnahmeraum 40 begrenzenden Anschlagmitteln 41 ermöglicht eine Aufnahme des Warenträgers, bevorzugt eine EU-Palette, Box etc. in Quer- oder Längsrichtung.

Die Anschlagmittel 41 sind auf dem Tragrahmen 38 über Rollapparate 85 aufgelagert und zwischen der Innenstellung und der Außenstellung mittels Stelltriebe 86 verstellbar.

Der Tragrahmen 38 ist am Mast 9 mittels des Hubantriebes 37 verstellbar geführt und an Führungsmitteln 87 über Schwenkanordnungen 88, um eine parallel zur Aufstandsfläche 8 und senkrecht zur Abförderrichtung - gemäß Pfeil 17 - verlaufende Schwenkachse 89, aus der in vollen Linien gezeigten Lage in eine in unterbrochenen Linien gezeigte Lage mittels Antriebe 90, z.B. Druckzylinder, Spindeltriebe, Seiltriebe etc., verstellbar.

Dies ermöglicht, eine zwischen den seitlichen Anschlagmitteln 41 eingespannte Lage der Ware oder Warengebinde, durch Verstellung des Tragrahmens in die winkelige Lage eine Ausbildung eines keilförmigen Zwischenraumes zwischen der aufzunehmenden Lage und der verbleibenden Lage wodurch die - nicht weiter gezeigte - Aufnahmefördervorrichtung zwischen die Lagen ohne wesentlichen Reibungswiderstand einführbar ist.

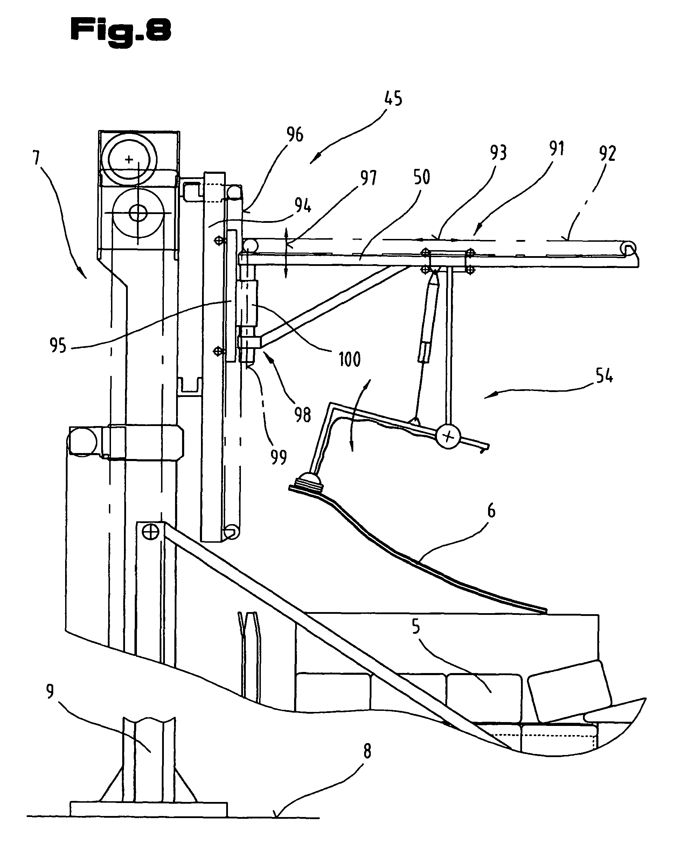

In der Fig. 8 ist eine andere Ausbildung der Abnahme- und Anhebevorrichtung 45 mit dem Auslegerarm 50 und der auf diesem über einen Schlitten 91 und beispielsweise einen Seiltrieb 92 - gemäß Doppelpfeil 93 - verfahrbaren Greifvorrichtung 54 gezeigt.

Der Auslegerarm 50 ist in einer vertikal verlaufenden Führungsschiene 94 und Rollapparat 95 und beispielsweise einem weiteren Seiltrieb 96 - gemäß Doppelpfeil 97 - in vertikaler Richtung verstellbar um beispielsweise, wie gezeigt, eine Trennlage 6 von den gestapelten Warengebinde 5 abzunehmen.

Weiter ist der Auslegerarm 50 am Rollapparat 95 über eine Schwenklagerung 98, die eine vertikal verlaufende Schwenkachse 99 ausbildet und einem Schwenkantrieb 100 in einer zur Aufstandsfläche 8 parallelen Ebene schwenkbar. Damit wird eine Ablagestellung der Greifvorrichtung 54 bei einem Verschwenken um etwa 90° aus der gezeigten Lage erreicht womit die Trennlage 6 neben der Hubfördervorrichtung 7 abgegeben werden kann.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten der Fördereinrichtung, wobei an dieser Stelle bemerkt sei, dass die Erfindung nicht auf die speziell dargestellten Ausführungsvarianten derselben eingeschränkt ist.

Der Ordnung halber sei abschließend darauf hingewiesen, dass zum besseren Verständnis des Aufbaus der Fördereinrichtung diese bzw. deren Bestandteile teilweise unmaßstäblich und/oder vergrößert und/oder verkleinert dargestellt wurden.

### Bezugszeichenaufstellung

- 1: Fördereinrichtung
- 2: Warenträger
- 3: Lage
- 4: Ware
- 5: Warengebinde

- 6: Trennlage
- 7: Hubfördervorrichtung
- 8: Aufstandsfläche
- 9: Mast
- 10: Führungsanordnung

- 11: Hubantrieb
- 12: Zugmitteltrieb
- 13: Lasttragmittel
- 14: Doppelpfeil
- 15: Rollen- oder Zugmittelförderer

- 16: Geschoßdecke
- 17: Pfeil
- 18: Aufnahmefördervorrichtung
- 19: Transferfördervorrichtung
- 20: Fördermittel

- 21: Förderebene
- 22: Führungsbahn
- 23: Verstellantrieb
- 24: Verstellantrieb
- 25: Pfeil

- 26: Pfeil
- 27: Abstand
- 28: Länge
- 29: Abfördervorrichtung
- 30: Gurtbandförderer

- 31: Endbereich
- 32: Tragrahmen
- 33: Kupplungsmittel
- 34: Fördermodul
- 35: Auflaufebene

- 36: Förderwalze
- 37: Hubantrieb
- 38: Tragrahmen
- 39: Anschlaganordnung
- 40: Aufnahmeraum

- 41: Anschlagmittel
- 42: Stellmittel
- 43: Doppelpfeil
- 44: Rückhaltemittel
- 45: Abnahme- bzw. Anhebevorrichtung

- 46: Führungsanordnung
- 47: Fahrschlitten
- 48: Antrieb
- 49: Führungsanordnung
- 50: Auslegerarm

- 51: Hubtrieb
- 52: Doppelpfeil
- 53: Doppelpfeil
- 54: Greifvorrichtung
- 55: Schwenklagerung

- 56: Schwenkachse
- 57: Greiferkopf
- 58: Hebelarm
- 59: Greifmittel
- 60: Stellmittel

- 61: Vakuumsauger
- 62: Gebindereihe
- 63: Rand
- 64: Hebehaken
- 65: Pfeil

- 66: Pfeil
- 67: Pfeil

- 85: Rollapparat

- 86: Stelltrieb
- 87: Führungsmittel
- 88: Schwenkanordnung
- 89: Schwenkachse
- 90: Antrieb

- 91: Schlitten
- 92: Seiltrieb
- 93: Doppelpfeil
- 94: Führungsschiene
- 95: Rollapparat

- 96: Seiltrieb
- 97: Doppelpfeil
- 98: Schwenklagerung
- 99: Schwenkachse
- 100: Schwenkantrieb

## Patentansprüche

1. Fördereinrichtung (1) zum Depalettieren und Ab- bzw. Weiterfördern von auf einem Warenträger (2) in mehreren Lagen gestapelten Waren (4) mit
- einer Hubfördervorrichtung (7) mit einem Lasttragmittel (13) für den Warenträger (2);
- einer, in einer sich zu einer Hubrichtung senkrecht erstreckenden Förderebene (21), in einer Abfördereinrichtung der Waren (4) relativ zum Lasttragmittel (13) verstellbaren, dem Lasttragmittel (13) zugewandt eine zur Förderebene (21) geneigte Auflaufebene (35) aufweisenden Fördervorrichtung;
wobei die Fördervorrichtung durch eine die Auflaufebene (35) ausbildende, in der Abförderrichtung reversibel über einen Verstellantrieb (23) in einer Führungsbahn (22) verfahrbare Aufnahmefördervorrichtung (18) und zumindest eine in der Abförderrichtung nachgeordnete in der Führungsbahn (22) verstellbare Transferfördervorrichtung (19) gebildet ist, **dadurch gekennzeichnet, dass** die Fördereinrichtung (1) eine Abnahme- bzw. Anhebevorrichtung (45) für zwischen den Lagen angeordneten Trennlagen (6) der Waren (4) aufweist, wobei die Abnahme- bzw. Anhebevorrichtung (45) der Förderebene (21) zugewandt eine Greifvorrichtung (54) aufweist und bevorzugt an einem Mast (9) der Hubfördervorrichtung (7) in einer zur Förderebene (21) senkrechter Richtung verstellbar angeordnet ist und die Greifvorrichtung (54) in zumindest einer weiteren Raumrichtung verstellbar ausgebildet ist, und dass die Transferfördervorrichtung (19) relativ zur Aufnahmefördervorrichtung (18) über einen zweiten Verstellantrieb (24) in der Führungsbahn (22) unabhängig verstellbar ausgebildet ist.

2. Fördereinrichtung (1) nach Anspruch 1, **dadurch gekennzeichnet, dass** die Abnahme- bzw. Anhebevorrichtung (45) über einen, mit einem Antrieb (48) versehenen Fahrschlitten (47) längs einer Führungsanordnung (10) des Mastes (9) in zur Förderebene (21) senkrechten Richtung verstellbar ist.

3. Fördereinrichtung (1) nach Anspruch 2, **dadurch gekennzeichnet, dass** die Greifvorrichtung (54) auf einem am Fahrschlitten (47) angeordneten Auslegerarm (50) in Abförderrichtung reversibel verstellbar angeordnet ist.

4. Fördereinrichtung (1) nach Anspruch 3, **dadurch gekennzeichnet, dass** der Auslegerarm (50) mit der Greifvorrichtung (54) in einer am Fahrschlitten (47) angeordneten, quer zur Abförderrichtung und parallel zur Förderebene (21) verlaufenden Führungsanordnung (49) verstellbar geführt ist.

5. Fördereinrichtung (1) nach Anspruch 3 oder 4, **dadurch gekennzeichnet, dass** der Auslegerarm (50) mit der Greifvorrichtung (54) an einem Rollapparat (95) in einer Schwenklagerung (98) und mittels eines Schwenkantriebes (100) um eine senkrecht zu einer Lasttragfläche (78) des Lasttragmittels (13) ausgerichteten Schwenkachse (99) schwenkbar gelagert ist.

6. Fördereinrichtung (1) nach Anspruch 1, **dadurch gekennzeichnet, dass** ein Verstellweg der Greifvorrichtung (54) in Abförderrichtung etwa einer maximalen Länge (28) des Warenträgers (2) bzw. Tiefe des Lasttragmittels (13) entspricht.

7. Fördereinrichtung (1) nach Anspruch 1, **dadurch gekennzeichnet, dass** eine Verstellung der Greifvorrichtung (54) in zur Abförderrichtung quer verlaufenden Richtung größer ist als eine Förderbreite der Aufnahmefördervorrichtung (18).

8. Fördereinrichtung (1) nach Anspruch 1, **dadurch gekennzeichnet, dass** die Greifvorrichtung (54) durch einen Hebehaken (64) gebildet ist.

9. Fördereinrichtung (1) nach Anspruch 1, **dadurch gekennzeichnet, dass** die Greifvorrichtung (54) durch einen Vakuumsauger (61) gebildet ist.

10. Fördereinrichtung (1) nach Anspruch 1, **dadurch gekennzeichnet, dass** der Verstellantrieb (23) mit einem Tragrahmen der Aufnahmefördervorrichtung (18) über ein elastisches Kupplungselement antriebsverbunden ist.

11. Fördereinrichtung (1) nach Anspruch 1, **dadurch gekennzeichnet, dass** der Verstellantrieb (23) der Aufnahmefördervorrichtung (18) für eine kraftanpassbare Vorschubbewegung der Aufnahmefördervorrichtung (18) ausgebildet ist.

12. Fördereinrichtung (1) nach Anspruch 1, **dadurch gekennzeichnet, dass** auf dem Lasttragmittel (13) oder am Mast (9) der Hubfördervorrichtung (7) in Hubrichtung relativ zum Lasttragmittel (13) verstellbar eine, einen dreiseitig begrenzten und der Aufnahmefördervorrichtung (18) zugewandt offenen Aufnahmeraum (40) für zumindest eine Lage (3) der Waren (4) umgrenzende Anschlaganordnung (39) angeordnet ist, die aus relativ zueinander zwischen einer Innenstellung und einer Außenstellung vorzugsweise unabhängig voneinander verstellbaren Anschlagmitteln (41) gebildet ist.

13. Fördereinrichtung (1) nach Anspruch 12, **dadurch gekennzeichnet, dass** die Anschlaganordnung (39) auf einem am Mast (9) über einen Hubantrieb (37), z.B. Zugmitteltrieb, verstellbar geführten Tragrahmen (38) angeordnet ist.

14. Fördereinrichtung (1) nach Anspruch 1, **dadurch gekennzeichnet, dass** in einem Bereich unterhalb der Förderebene (21) ein vom Lasttragmittel (13) unabhängiges, bevorzugt in Richtung des Aufnahmeraumes (40) verstellbares über die Förderbreite erstreckendes Rückhaltemittel (44) angeordnet ist.

15. Fördereinrichtung (1) nach Anspruch 12, **dadurch gekennzeichnet, dass** die Anschlagmittel (41) der Anschlaganordnung (39) mehrere in Umfangsrichtung des Aufnahmeraumes (40) angeordnete, voneinander unabhängig zwischen der Innen- und der Außenstellung verstellbare Spannmittel aufweisen.

16. Fördereinrichtung (1) nach Anspruch 15, **dadurch gekennzeichnet, dass** die in den einander gegenüberliegenden Anschlagmitteln (41) angeordneten Spannmittel zwischen der Innenstellung und der Außenstellung annähernd synchron verstellbar sind.

17. Fördereinrichtung (1) nach Anspruch 12, **dadurch gekennzeichnet, dass** die Anschlaganordnung (39) beispielsweise in zu einer Lasttragfläche des Lasttragmittels (13) senkrecht verlaufenden Richtung verstellbar am Mast (9) oder dem Lasttragmittel (13) gelagert ist.

18. Fördereinrichtung (1) nach einem der Ansprüche 12 bis 17, **dadurch gekennzeichnet, dass** die Anschlaganordnung (39) zwischen einer zu der Lasttragfläche parallelen oder winkelig verlaufenden Ebene schwenkbar ist.

19. Fördereinrichtung (1) nach einem der Ansprüche 12 bis 18, **dadurch gekennzeichnet, dass** die Anschlaganordnung (39) mit den Anschlagmitteln (41) um eine parallel zur Förderebene (21) verlaufenden Schwenkachse (89) am Tragrahmen (38) schwenkbar gelagert ist.

20. Fördereinrichtung (1) nach Anspruch 14, **dadurch gekennzeichnet, dass** das Rückhaltemittel (44) durch ein über die Förderbreite erstreckendes, Anschlagschild gebildet ist.

21. Fördereinrichtung (1) nach einem der Ansprüche 12 bis 20, **dadurch gekennzeichnet, dass** Antriebe der Anschlagmittel (41) und/oder Spannmittel und/oder des Rückhaltemittels (44) durch mit einem Druckmedium beaufschlagbare Stellmittel (42), z. B. Druckzylinder, gebildet sind.

22. Fördereinrichtung (1) nach Anspruch 1, **dadurch gekennzeichnet, dass** in dem Endbereich der Aufnahmefördervorrichtung (18) zumindest ein die Auflaufebene (35) ausbildendes Fördermodul (34), beispielsweise über Kupplungsmittel (33) lösbar angeordnet ist.

23. Fördereinrichtung (1) nach Anspruch 22, **dadurch gekennzeichnet, dass** die Kupplungsmittel (33) im Wesentlichen in Abförderrichtung der Waren (4) elastisch ausgebildet sind.

24. Fördereinrichtung (1) nach Anspruch 22, **dadurch gekennzeichnet, dass** das Fördermodul (34) an der Aufnahmefördervorrichtung (18) um eine zur Förderebene (21) parallel und Abförderrichtung etwa senkrecht verlaufende Schwenkachse, zur Verstellung der Neigung der Auflaufebene (35), schwenkbar gelagert ist.

25. Fördereinrichtung (1) nach einem der Ansprüche 22 bis 24, **dadurch gekennzeichnet, dass** das Fördermodul (34) am Tragrahmen der Aufnahmefördervorrichtung (18) im Wesentlichen in Abförderrichtung der Waren (4) verstellbar, insbesondere federelastisch gelagert ist.

26. Fördereinrichtung (1) nach einem der Ansprüche 22 bis 25, **dadurch gekennzeichnet, dass** über die Förderbreite ein oder mehrere der Fördermodule (34) auswechselbar am Tragrahmen der Aufnahmefördervorrichtung (18) angeordnet sind.

27. Fördereinrichtung (1) nach einem derAnsprüche 22 bis 26, **dadurch gekennzeichnet, dass** das Fördermodul (34) durch einen Band- bzw. Riemenförderer gebildet ist.

28. Fördereinrichtung (1) nach einem der Ansprüche 22 bis 27, **dadurch gekennzeichnet, dass** dem Fördermodul (34) eine angetriebene Förderwalze (36) vorgeordnet ist.

29. Fördereinrichtung (1) nach Anspruch 28, **dadurch gekennzeichnet, dass** die Förderwalze (36) am Traggestell im Wesentlichen in Abförderrichtung der Waren (4) bzw. der Warengebinde (5) verstellbar, insbesondere federelastisch gelagert ist.

30. Fördereinrichtung (1) nach Anspruch 28 oder 29, **dadurch gekennzeichnet, dass** die Förderwalze (36) mit einer einen erhöhten Reibungskoeffizienten aufweisenden Oberfläche versehen ist.

31. Fördereinrichtung (1) nach Anspruch 22, **dadurch gekennzeichnet, dass** das bzw. die Fördermodule (34) mit einer Antriebsanordnung der Aufnahmefördervorrichtung (18) antriebsverbunden ist bzw. sind.

32. Fördereinrichtung (1) nach Anspruch 22, **dadurch gekennzeichnet, dass** das bzw. die Fördermodule (34) mit einem von der Aufnahmefördervorrichtung (18) unabhängigen Antrieb versehen ist bzw. sind.

## Claims

1. Conveyor system (1) for depalletising and removing or advancing goods (4) which are stacked in a number of layers on a goods support (2), comprising
- a lifting conveyor device (7) with a load carrying means (13) for the goods support (2);
- a conveyor device extending in a conveying plane (21) perpendicular to a lifting direction, displaceable in the direction of removal of the goods (4) relative to the load carrying means (13) and having an inclined run-on plane (35) facing the conveying plane (21);
and the conveyor device is provided in the form of an accommodating conveyor arrangement (18) constituting the run-on level (35), reversibly adjustable in a guide track (22) in the conveying direction by means of a displacement drive (23), and at least one transfer conveyor arrangement (19) disposed downstream in the removal direction and displaceable in the guide track (22) by means of a displacement drive (24), **characterised in that** the conveyor system (1) has an arrangement (45) for removing and lifting separating layers (6) for the goods (4) disposed between the layers, and the removing and lifting arrangement (45) has a gripping arrangement (54) facing the conveying plane (21) and is preferably disposed on a post (9) of the lifting conveyor device (7) so as to be displaceable in a direction perpendicular to the conveying plane (21), and the gripping arrangement (54) is displaceable in at least one other spatial direction, and the transfer conveyor arrangement (19) is designed to be independently displaceable in the guide track (22) relative to the accommodating conveyor arrangement (18) by means of a second displacement drive (24).

2. Conveyor system (1) as claimed in claim 1, **characterised in that** the removing and lifting arrangement (45) is displaceable along a guiding arrangement (10) of the post (9) in a direction perpendicular to the conveying plane (21) by means of a travelling slide (47) provided with a drive (48).

3. Conveyor system (1) as claimed in claim 2, **characterised in that** the gripping arrangement (54) is disposed so that it can be reversibly displaced in the removal direction on a jib (50) arranged on the travelling slide (47).

4. Conveyor system (1) as claimed in claim 3, **characterised in that** the jib (50) together with the gripping arrangement (54) is guided in displacement in a guiding arrangement (49) disposed on the travelling slide (47) extending transversely to the removal direction and parallel with the conveying plane (21).

5. Conveyor system (1) as claimed in claim 3 or 4, **characterised in that** the jib (50) together with the gripping arrangement (54) is mounted on a rolling apparatus (95) in a pivoting bearing (98) and can be pivoted by means of a pivoting drive (100) about a pivot axis (99) extending perpendicular to a load bearing surface (78) of the load carrying means (13).

6. Conveyor system (1) as claimed in claim 1, **characterised in that** a displacement path of the gripping arrangement (54) in the removal direction approximately corresponds to a maximum length (28) of the goods support (2) and/or depth of the load carrying means (13).

7. Conveyor system (1) as claimed in claim 1, **characterised in that** a displacement of the gripping arrangement (54) in the direction extending transversely to the removal direction is greater than a conveying width of the accommodating conveyor arrangement (18).

8. Conveyor system (1) as claimed in claim 1, **characterised in that** the gripping arrangement (54) is provided in the form of a lifting hook (64).

9. Conveyor system (1) as claimed in claim 1, **characterised in that** the gripping arrangement (54) is provided in the form of a vacuum suction device (61).

10. Conveyor system (1) as claimed in claim 1, **characterised in that** the displacement drive (23) is drivingly connected to a support frame of the accommodating conveyor arrangement (18) by means of an elastic coupling element.

11. Conveyor system (1) as claimed in claim 1, **characterised in that** the displacement drive (23) of the accommodating conveyor arrangement (18) is designed to produce a force-adjustable advancing movement of the accommodating conveyor arrangement (18).

12. Conveyor system (1) as claimed in claim 1, **characterised in that** on the load carrying means (13) or on the post (9) of the lifting conveyor device (7), adjustable in the direction of lifting relative to the load carrying means (13), there is an accommodating space (40), bounded on three sides and open towards the accommodating conveyor arrangement (18), for an abutment arrangement (39) surrounding at least one layer (3) of goods (4), provided in the form of abutment means (41) which are displaceable relative to each other, preferably independently, between an inner position and an outer position.

13. Conveyor system (1) as claimed in claim 12, **characterised in that** the abutment arrangement (39) is disposed on a support frame (38) which is guided in displacement on the post (9) by means of a lifting drive (37), e.g. pulley block.

14. Conveyor system (1) as claimed in claim 1, **characterised in that** in an area below the conveying plane (21), a retaining means (44) extending across the conveying width is provided independently of the load carrying means (13) and is preferably displaceable in the direction of the accommodating space (40).

15. Conveyor system (1) as claimed in claim 12, **characterised in that** the abutment means (41) of the abutment arrangement (39) have several tensioning means disposed in the circumferential direction of the accommodating space (40) which can be displaced between the inner and outer position independently of one another.

16. Conveyor system (1) as claimed in claim 15, **characterised in that** the tensioning means disposed in the oppositely lying abutment means (41) can be displaced between the inner position and outer position approximately synchronously.

17. Conveyor system (1) as claimed in claim 12, **characterised in that** the abutment arrangement (39) is mounted on the post (9) or the load carrying means (13) so as to be displaceable in a direction extending perpendicular to a load carrying surface of the load carrying means (13).

18. Conveyor system (1) as claimed in one of claims 12 to 17, **characterised in that** the abutment arrangement (39) is pivotable between a plane extending parallel with or at an angle to the load bearing surface.

19. Conveyor system (1) as claimed I one of claims 12 to 18, **characterised in that** the abutment arrangement (39) with the abutment means (41) is mounted so as to be pivotable on the support frame (38) about a pivot axis (89) extending parallel with the conveying plane (21).

20. Conveyor system (1) as claimed in claim 14, **characterised in that** the retaining means (44) are provided in the form of a stop plate extending across the conveying width.

21. Conveyor system (1) as claimed in one of claims 12 to 20, **characterised in that** drives of the abutment means (41) and/or tensioning means and/or retaining means (44) are provided in the form of actuator means (42) operated with a pressurised medium, e.g. a pressurised cylinder.

22. Conveyor system (1) as claimed in claim 1, **characterised in that** at least one conveyor module (34) constituting the run-on plane (35) is disposed in the end section of the accommodating conveyor arrangement (18) so as to be detachable, for example via coupling means (33).

23. Conveyor system (1) as claimed in claim 22, **characterised in that** the coupling means (33) are essentially elastic in the removal direction of the goods (4).

24. Conveyor system (1) as claimed in claim 22, **characterised in that** the conveyor module (34) is mounted on the accommodating conveyor arrangement (18) so as to be pivotable about a pivot axis extending parallel with the conveying plane (21) and perpendicular to the removal direction in order to adjust the inclination of the run-on plane (35).

25. Conveyor system (1) as claimed in one of claims 22 to 24, **characterised in that** the conveyor module (34) is disposed on the support frame of the accommodating conveyor arrangement (18) so as to be displaceable, more particularly in a spring-loaded manner, essentially in the direction of removal of the goods (4).

26. Conveyor system (1) as claimed in one of claims 22 to 25, **characterised in that** one or more of the conveyor modules (34) are disposed interchangeably across the conveying width on the support frame of the accommodating conveyor arrangement (18).

27. Conveyor system (1) as claimed in one of claims 22 to 26, **characterised in that** the conveyor module (34) is provided in the form of a belt or strap conveyor.

28. Conveyor system (1) as claimed in one of claims 22 to 27, **characterised in that** a driven conveyor roller (36) is preferably disposed upstream of the conveyor module (34).

29. Conveyor system (1) as claimed in claim 26, **characterised in that** the conveyor roller (36) is mounted so as to be displaceable, more particularly in a spring-loaded manner, on the support frame essentially in the removal direction of the goods (4) and/or goods containers (5).

30. Conveyor system (1) as claimed in claim 28 or 29, **characterised in that** the conveyer roller (36) is provided with a surface exhibiting a high coefficient of friction.

31. Conveyor system (1) as claimed in claim 22, **characterised in that** the conveyor module (34) is drivingly connected to a drive arrangement of the accommodating conveyor arrangement (18).

32. Conveyor system (1) as claimed in claim 22, **characterised in that** the conveyor module (34) is provided with a drive independent of the accommodating conveyor arrangement (18).

## Revendications

1. Équipement de transport (1) pour dépalettiser et pour évacuer et acheminer des marchandises (4) empilées en plusieurs couches sur un support de marchandises (2), comportant
- un convoyeur de levage (7) avec un porte-charge (13) pour le support de marchandises (2);
- dans un plan de transport (21) orienté perpendiculairement à une direction de levage, un dispositif de transport réglable par rapport au porte-charge (13) dans un système d'évacuation des marchandises (4), orienté vers le porte-charge (13) et comportant un plan de réception (35) incliné par rapport au plan de transport (21);
ledit dispositif de transport étant formé par un convoyeur de réception (18), formant le plan de réception (35) et mobile de manière réversible dans le sens d'évacuation par un système d'entraînement (23) dans une voie de guidage (22), et par au moins un convoyeur de transfert (19), disposé en aval dans le sens d'évacuation et mobile dans la voie de guidage (22),
**caractérisé en ce que** l'équipement de transport (1) comporte un dispositif de prélèvement ou de levage (45) pour des intercalaires de séparation (6) des marchandises (4), agencés entre les couches, le dispositif de prélèvement ou de levage (45) comportant un dispositif préhenseur (54) orienté vers le plan de transport (21), et est disposé de préférence sur un mât (9) du convoyeur de levage (7) de manière mobile dans une direction perpendiculaire au plan de transport (21), et le dispositif préhenseur (54) est réalisé de manière mobile dans au moins une autre direction dans l'espace, et **en ce que** le convoyeur de transfert (19) est réalisé de manière mobile indépendamment dans la voie de guidage (22) par rapport au convoyeur de réception (18) par l'intermédiaire d'un deuxième système d'entraînement (24).

2. Équipement de transport (1) selon la revendication 1, **caractérisé en ce que** le dispositif de prélèvement ou de levage (45) peut être déplacé par un chariot mobile (47) muni d'un système d'entraînement (48), dans une direction perpendiculaire au plan de transport (21), le long d'un système de guidage (10) du mât (9).

3. Équipement de transport (1) selon la revendication 2, **caractérisé en ce que** le dispositif préhenseur (54) est agencé mobile de manière réversible dans le sens d'évacuation, sur un bras en porte-à-faux (50) agencé sur le chariot mobile (47).

4. Équipement de transport (1) selon la revendication 3, **caractérisé en ce que** le bras en porte-à-faux (50) avec le dispositif préhenseur (54) est monté de manière mobile dans un système de guidage (49) agencé sur le chariot mobile (47) et orienté transversalement au sens d'évacuation et parallèlement au plan de transport (21).

5. Équipement de transport (1) selon la revendication 3 ou 4, **caractérisé en ce que** le bras en porte-à-faux (50) avec le dispositif préhenseur (54) est monté sur un appareil de roulement (95) dans un palier pivotant (98) et est apte à pivoter au moyen d'un système d'entraînement pivotant (100) autour d'un axe de pivotement (99) orienté perpendiculairement à une surface de charge (78) du porte-charge (13).

6. Équipement de transport (1) selon la revendication 1, **caractérisé en ce qu'**un déplacement du dispositif préhenseur (54) dans le sens d'évacuation correspond sensiblement à une longueur (28) maximale du support de marchandises (2) ou à une profondeur maximale du porte-charge (13).

7. Équipement de transport (1) selon la revendication 1, **caractérisé en ce qu'**un déplacement du dispositif préhenseur (54) dans une direction transversale au sens d'évacuation est supérieure à une largeur de transport du convoyeur de réception (18).

8. Équipement de transport (1) selon la revendication 1, **caractérisé en ce que** le dispositif préhenseur (54) est formé par un crochet de levage (64).

9. Équipement de transport (1) selon la revendication 1, **caractérisé en ce que** le dispositif préhenseur (54) est formé par une ventouse (61).

10. Équipement de transport (1) selon la revendication 1, **caractérisé en ce que** le système d'entraînement (23) est relié en entraînement à un bâti de support du convoyeur de réception (18) par l'intermédiaire d'un élément de couplage élastique.

11. Équipement de transport (1) selon la revendication 1, **caractérisé en ce que** le système d'entraînement (23) du convoyeur de réception (18) est réalisé pour un mouvement d'avance, ajustable aux forces appliquées, du convoyeur de réception (18).

12. Équipement de transport (1) selon la revendication 1, **caractérisé en ce que** sur le porte-charge (13) ou sur le mât (9) du convoyeur de levage (7) est agencé, de manière mobile dans le sens de levage par rapport au porte-charge (13), un système de butée (39), qui entoure un espace de réception (40), délimité sur trois côtés et ouvert vers le convoyeur de réception (18), pour au moins une couche (3) de marchandises (4), et qui est formé par des moyens de butée (41) mobiles l'un par rapport à l'autre, de préférence indépendamment les uns des autres, entre une position intérieure et une position extérieure.

13. Équipement de transport (1) selon la revendication 12, **caractérisé en ce que** le système de butée (39) est agencé sur un bâti de support (38) monté mobile sur le mât (9) par l'intermédiaire d'un système d'entraînement de levage (37), tel qu'un mécanisme de traction.

14. Équipement de transport (1) selon la revendication 1, **caractérisé en ce que** dans une zone en dessous du plan de transport (21) est agencé un moyen de retenue (44) s'étendant sur la largeur de transport, indépendant du porte-charge (13), mobile de préférence vers l'espace de réception (40).

15. Équipement de transport (1) selon la revendication 12, **caractérisé en ce que** les moyens de butée (41) du système de butée (39) comportent plusieurs moyens de serrage, agencés dans le sens du pourtour de l'espace de réception (40) et mobiles indépendamment les uns des autres entre la position intérieure et la position extérieure.

16. Équipement de transport (1) selon la revendication 15, **caractérisé en ce que** les moyens de serrage agencés dans les moyens de butée (41) face à face sont mobiles, sensiblement de manière synchrone, entre la position intérieure et la position extérieure.

17. Équipement de transport (1) selon la revendication 12, **caractérisé en ce que** le système de butée (39) est monté sur le mât (9) ou le porte-charge (13), de manière mobile par exemple dans une direction perpendiculaire à une surface de charge du porte-charge (13).

18. Équipement de transport (1) selon l'une quelconque des revendications 12 à 17, **caractérisé en ce que** le système de butée (39) est apte à pivoter entre un plan orienté parallèlement ou en angle par rapport à ladite surface de charge.

19. Équipement de transport (1) selon l'une quelconque des revendications 12 à 18, **caractérisé en ce que** le système de butée (39) avec les moyens de butée (41) est monté sur le bâti de support (38) de manière à pouvoir pivoter autour d'un axe de pivotement (89) parallèle au plan de transport (21).

20. Équipement de transport (1) selon la revendication 14, **caractérisé en ce que** le moyen de retenue (44) est formé par un bouclier de butée s'étendant sur la largeur de transport.

21. Équipement de transport (1) selon l'une quelconque des revendications 12 à 20, **caractérisé en ce que** des systèmes d'entraînement des moyens de butée (41) et/ou des moyens de serrage et/ou du moyen de retenue (44) sont formés par des moyens de réglage (42), tels que des vérins pneumatiques, sollicités par un fluide sous pression.

22. Équipement de transport (1) selon la revendication 1, **caractérisé en ce que** dans la zone d'extrémité du convoyeur de réception (18) est agencé de manière amovible, par l'intermédiaire de moyens de couplage (33) par exemple, au moins un module de transport (34) formant le plan de réception (35).

23. Équipement de transport (1) selon la revendication 22, **caractérisé en ce que** les moyens de couplage (33) sont réalisés sous forme élastique sensiblement dans le sens d'évacuation des marchandises (4).

24. Équipement de transport (1) selon la revendication 22, **caractérisé en ce que** le module de transport (34) est monté sur le convoyeur de réception (18) de manière à pouvoir pivoter autour d'un axe de pivotement parallèle au plan de transport (21) et sensiblement perpendiculaire au sens d'évacuation, pour régler l'inclinaison du plan de réception (35).

25. Équipement de transport (1) selon l'une quelconque des revendications 22 à 24, **caractérisé en ce que** le module de transport (34) est monté, en particulier de manière flexible, sur le bâti de support du convoyeur de réception (18), de manière mobile sensiblement dans le sens d'évacuation des marchandises (4).

26. Équipement de transport (1) selon l'une quelconque des revendications 22 à 25, **caractérisé en ce qu'**un ou plusieurs modules de transport (34) sont agencés sur la largeur de transport de manière permutable sur le bâti de support du convoyeur de réception (18).

27. Équipement de transport (1) selon l'une quelconque des revendications 22 à 26, **caractérisé en ce que** module de transport (34) est formé par un convoyeur à bande ou courroie.

28. Équipement de transport (1) selon l'une quelconque des revendications 22 à 27, **caractérisé en ce qu'**un cylindre de transport (36) actionné est monté en amont du module de transport (34).

29. Équipement de transport (1) selon la revendication 28, **caractérisé en ce que** le cylindre de transport (36) est monté, de préférence de manière flexible, sur le bâti de support, de manière mobile sensiblement dans le sens d'évacuation des marchandises (4) ou du groupe de marchandises (5).

30. Équipement de transport (1) selon la revendication 28 ou 29, **caractérisé en ce que** le cylindre de transport (36) est muni d'une surface avec un coefficient de frottement élevé.

31. Équipement de transport (1) selon la revendication 22, **caractérisé en ce que** le ou les modules de transport (34) est ou sont relié(s) en entraînement avec un système d'entraînement du convoyeur de réception (18).

32. Équipement de transport (1) selon la revendication 22, **caractérisé en ce que** le ou les modules de transport (34) est ou sont muni(s) d'un système d'entraînement indépendant du convoyeur de réception (18).
